# EUROPÄISCHE PATENTSCHRIFT

(11) **EP 3 178 152 B1**
(45) Veröffentlichungstag und Bekanntmachung des Hinweises auf die Patenterteilung: **29.09.2021**
(21) Anmeldenummer: 15747466.9
(22) Anmeldetag: 04.08.2015
(51) Int. Cl.: H02K 1/24, H02K 19/14, H02K 17/16

(54) **ROTOR UND RELUKTANZMASCHINE**
ROTOR AND RELUCTANCE MACHINE
ROTOR ET MACHINE À RELUCTANCE

(30) Priorität: 04.08.2014 DE 102014215303
(43) Veröffentlichungstag der Anmeldung: 14.06.2017
(73) Patentinhaber: KSB SE & Co. KGaA, 67227 Frankenthal (DE)
(72) Erfinder: JANJIC, Boris, 67227 Frankenthal (DE); SCHAAB, Jochen, 67227 Frankenthal (DE)
(86) Internationale Anmeldenummer: PCT/EP2015/067904
(87) Internationale Veröffentlichungsnummer: WO 2016/020359

(56) Entgegenhaltungen:
- DE-A1- 1 638 449
- US-A1- 2003 173 861
- None

## Beschreibung

Die Erfindung betrifft einen Rotor für eine Reluktanzmaschine umfassend ein zylinderförmig aufgebautes weichmagnetisches Element, wobei das weichmagnetische Element Aussparungen zur Ausbildung von magnetischen Flusssperren aufweist und zumindest ein Teil der Aussparungen mit einem elektrisch-leitenden und magnetisch-nichtleitenden Füllmaterial gefüllt ist, um einen Anlaufkäfig des Rotors auszubilden.

Üblicherweise werden Rotoren für Synchronreluktanzmaschinen mit einem zylinderförmigen weichmagnetischen Element ausgestattet, das koaxial auf der Rotor-achse angeordnet wird. Zur Ausbildung mindestens eines Polpaares bzw. Lückenpaares umfasst das weichmagnetische Element Flussleit- sowie Flusssperrabschnitte, die sich gegenseitig in einer unterschiedlich stark ausgeprägten magnetischen Permeabilität unterscheiden. Der Abschnitt mit großer magnetischer Leitfähigkeit wird bekannter Weise als d-Achse des Rotors und der Abschnitt mit vergleichsweise geringerer Leitfähigkeit als q-Achse des Rotors gekennzeichnet. Ein optimaler Wirkungsgrad des Reluktanzmotors und damit eine optimale Drehmomentausbeute stellt sich dann ein, wenn die d-Achse eine möglichst große magnetische Leitfähigkeit und die q-Achse eine möglichst niedrige magnetische Leitfähigkeit aufweist.

Erreicht wird diese Voraussetzung oftmals durch die Ausbildung von mehreren mit Luft gefüllten Aussparungen im weichmagnetischen Element entlang der q-Achse, wodurch die magnetische Leitfähigkeit sinkt und dadurch der magnetische Fluss in Richtung der q-Achse gehemmt wird. Das so aufgebaute weichmagnetische Element wird anschließend auf einer Rotorwelle aufgebracht und axial sowie tangential fixiert.

Aus Stabilitätsgründen werden ein oder mehrere Flusssperren durch radial orientierte innere Stege zweigeteilt. Die Steganordnung erhöht die Festigkeit des Blechpaketes, was insbesondere die Rotorstabilität im Betrieb optimiert. Die Breite der Stege ist gering, um die magnetische Leitfähigkeit in der q-Achse so gering wie möglich zu halten. Auch am äußeren Rotorumfang verlaufen Stege, die die Flusssperren vom Rotorumfang abgrenzen.

Synchronreluktanzmotoren werden in der Regel über einen Frequenzumrichter gespeist, wodurch sich die Drehzahl von 0 bis zur Betriebszahl hochführen und während des Betriebs verstellen lässt. Insbesondere kann die Drehzahl zum Anlaufen des Motors schrittweise erhöht werden. Wird der Synchronreluktanzmotor hingegen am starren Netz betrieben, ist der Einsatz eines Anlaufkäfigs erforderlich, um einen asynchronen Anlauf zu ermöglichen. Sobald sich die Drehzahl des Rotors der synchronen Drehzahl annähert, überwiegt das Reluktanzmoment und der Rotor läuft synchron mit dem umlaufenden magnetischen Drehfeld. Aufbau und Herstellung konventioneller Anlaufkäfige, bestehend aus Leiterstäben und Kurzschlussringen, waren bisher jedoch vergleichsweise aufwendig und teuer.

Die DE 16 38 449 A1 offenbart einen Rotor eines Reluktanzmotors mit in Segmenten unterteiltem Läufer.

Die US 2003/0173861 A1 offenbart einen Rotor eines Synchronreluktanzmotors und ein Verfahren zur Herstellung eines Synchronreluktanzmotors.

Die Aufgabe der vorliegenden Erfindung ist es, einen Rotor für eine Reluktanzmaschine derart weiterzubilden, so dass dieser innerhalb einer Line-Start-Synchronreluktanzmaschine am starren Netz eingesetzt werden kann.

Gelöst wird diese Aufgabe durch einen Rotor gemäß den Merkmalen des Anspruchs 1. Vorteilhafte Ausgestaltungen des Rotors sind Gegenstand der abhängigen Unteransprüche.

Erfindungsgemäß beträgt beim gattungsgemäßen Rotor das Verhältnis zwischen der Fläche der ausgefüllten Bereiche der Flusssperren und der Fläche der nicht ausgefüllten Bereiche der Flusssperren für wenigstens einen Rotorpol, vorzugsweise für alle Rotorpole, mindestens 0,2.

Bei der Fläche des ausgefüllten Bereichs der Flusssperren handelt es sich um die ausgefüllte Fläche, die sich durch einen Schnitt quer zur Axialachse des Rotors ergibt, d.h. die Querschnittsfläche des verwendeten magnetisch-nichtleitenden und elektrisch-leitenden Füllmaterials. Insbesondere handelte es sich um die Flächensumme des Füllmaterials für alle Flusssperren des Rotors.

Die Fläche der nicht ausgefüllten Flusssperren ergibt sich in analoger Weise durch den Bereich der Flusssperren, die mit einem anderweitigen Füllmaterial gefüllt sind bzw. nicht gefüllt sind, so zum Beispiel Luft enthalten.

Der Rotor selbst kann bspw. als Blechpaket ausgeführt sein, wobei sich die einzelnen Blechschnitte durch das erfindungsgemäße Flächenverhältnis auszeichnen.

Zur Ausbildung des Anlaufkäfigs sind die Flusssperren bzw. Teilbereiche der Flusssperren eines radial außen liegenden Rotorbereichs mit dem elektrisch-leitenden Füllmaterial gefüllt. Der davon abgegrenzte innere Rotorbereich umfasst die ungefüllten bzw. mit dem anderweitigen Füllstoff versehenen Flusssperren. Idealerweise ergibt sich ein ringartiger äußerer Rotorbereich. Für die Betriebscharakteristik des Rotors kommt es entscheiden auf das Verhältnis der ausgefüllten Flusssperrenfläche zur nicht ausgefüllten Flusssperrenfläche an. Untersuchungen haben ergeben, dass ab einem Verhältnis von mindestens 0,2 ein zuverlässiges Synchronisieren des Rotors mit der Frequenz der Netzspannung erfolgen kann.

Als Füllmaterial dient vorzugsweise Aluminium bzw. eine Aluminiumlegierung. Derartige Materialien können per Gussverfahren eingebracht bzw. Druckgussverfahren eingepresst werden. Alternativ oder zusätzlich ist es ebenfalls denkbar, derartige Füllmaterialien bereits als Festkörper in die entsprechenden Aussparrungen der Rotorgeometrie einzubringen.

Die verbleibenden Flusssperren, d.h. diejenigen, die nicht mit einem entsprechenden Füllmaterial ausgefüllt sind, können bspw. mit einem abweichenden Füllmaterial befüllt werden, so z.B. mittels eines paramagnetischen Materials zur Verringerung der Permeabilität.

In einer besonders bevorzugten Ausgestaltung der Erfindung liegt das Verhältnis in einem Bereich zwischen 0,2 und 3, bevorzugt in einem Bereich zwischen 0,3 und 3 und idealerweise in einem Bereich zwischen 0,75 bis 1,5.

Für die Bestimmung des erfindungsgemäßen Verhältnisses bzw. des vorteilhaften Verhältnisses kann es zweckmäßig sein, dass nur diejenigen Flusssperren für die Berechnung des Verhältnisses Berücksichtigung finden, die mit entsprechendem Füllmaterial zumindest teilweise befüllt sind. Weiterhin können bei der Berechnung des Verhältnisses auch nur diejenigen Flusssperren miteinbezogen werden, deren Enden an den Rotorumfang heranreichen bzw. sich diesem annähern. Diese Ausgestaltung der Flusssperren ist bspw. durch das bekannte "Vagati-Design" publik geworden, insbesondere durch die Patentschrift US 5,818,140.

Bei derartigen Rotorgeometrien reichen beide Enden der Flusssperren an den Rotorumfang heran, d.h. die Flusssperren kennzeichnen sich durch eine bananenartige Formgebung. Diese Flusssperren haben maßgeblichen Anteil am Reluktanzverhalten während des Rotorbetriebes, so dass es unter Umständen sinnvoll sein kann, nur derartige Flusssperren für die Verhältnisberechnung zu berücksichtigen.

Gemäß der Erfindung ist es vorteilhaft, wenn das Verhältnis zwischen dem ausgefüllten und dem nicht ausgefüllten Bereich der in Radialrichtung des Rotors innenliegenden Flusssperre einen vorgegebenen Wert aufweist. Dieses Verhältnis kann für wenigstens einen Rotorpol, bevorzugt für sämtliche Flusssperrenabschnitte gelten. Erfindungsgemäß liegt das Verhältnis der in Radialrichtung des Rotors innenliegenden Flusssperre im Bereich zwischen 0,35 und 0,6.

Weiterhin ist es denkbar, dass die aufgrund der vorstehenden Verhältnisangabe resultierende Fläche des ausgefüllten Bereichs der in Radialrichtung innenliegenden Flusssperre als Maßstab für die Flächen der ausgefüllten Bereiche der weiter außen liegenden Flusssperren dient. Dies bedeutet, dass die Fläche des ausgefüllten Bereichs zumindest einer weiteren Flusssperre eines Rotorpols, die nicht die innenliegende Flusssperre ist, der Fläche des ausgefüllten Bereichs der innenliegenden Flusssperre entspricht bzw. nahezu identisch zu dieser ist. Diese Voraussetzung kann unter Umständen für die flächenmäßig kleinsten Flusssperren nicht eingehalten werden, da diese keinen ausreichenden Füllraum für die Flächenvorgabe bieten. In diesem Fall gilt die Flächenvorgabe zumindest für die teilgefüllten Flusssperren.

Die Erfindung betrifft des Weiteren eine Reluktanzmaschine, insbesondere eine Synchronreluktanzmaschine, mit wenigstens einem Rotor gemäß der vorliegenden Erfindung bzw. einer vorteilhaften Ausgestaltung der vorliegenden Erfindung. Die Eigenschaften der Reluktanzmaschine entsprechen offensichtlich denen des Rotors, weshalb an dieser Stelle auf eine wiederholende Beschreibung verzichtet wird.

Die Maschine dient vorzugsweise für den Pumpenantrieb. Die Erfindung beinhaltet folglich auch eine Pumpe mit einem Reluktanz- bzw. Synchron-Reluktanzmotor gemäß der vorliegenden Erfindung.

Aufgrund der erfindungsgemäßen Rotorgeometrie und dem entsprechenden Füllverhältnis der einzelnen Flusssperren kann ein optimaler Anlaufkäfig erzeugt werden, wobei jedoch die Masse des Füllmaterials und damit die Masse des gebildeten Anlaufkäfigs möglichst klein gehalten wird. Durch den Rotor kann ein Line-Start-Synchronreluktanzmotor gebildet werden, der problemlos am starren Netz betreibbar ist und auch ohne Frequenzumwandler aufgrund der Ausbildung des Aluminiumkäfigs anlaufen kann und bis zur vollständigen Synchronisierung mit der Netzspannung anläuft.

Weitere Vorteile und Eigenschaften der Erfindung sollen im Folgenden anhand der in den Zeichnungen dargestellten Ausführungsbeispiele näher erläutert werden. Es zeigen:
- Figur 1:: ein erstes Ausführungsbeispiel des erfindungsgemäßen Rotors,
- Figur 2:: ein zweites Ausführungsbeispiel des erfindungsgemäßen Rotors,
- Figur 3:: ein drittes Ausführungsbeispiel des erfindungsgemäßen Rotors,
- Figur 4:: eine Diagrammdarstellung zur Verdeutlichung des Zusammenhangs zwi-schen Flächenverhältnis und Betriebsverhalten des Rotors bzw. der Re-luktanzmaschine,
- Figur 5:: unterschiedliche Darstellungen des Rotorbleches gemäß Figur 3 während des Herstellungsprozesses und
- Figur 6:: ein Ausschnitt des erfindungsgemäßen Rotors gemäß den Ausführungsvari-anten der Figuren 1, 2 und 3.

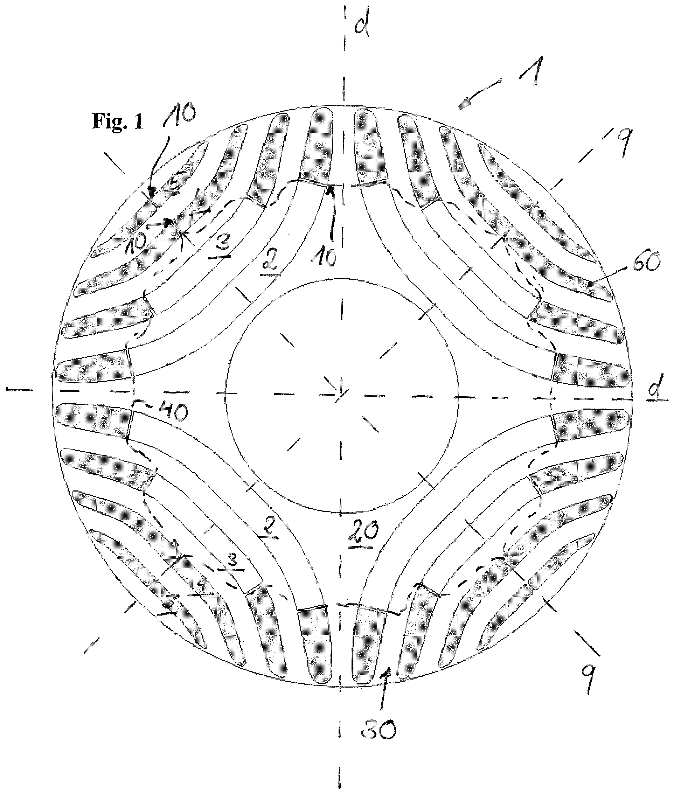

Die Figuren 1 bis 3 zeigen Draufsichten auf ein Rotorblech 1 unterschiedlicher Ausführungsvarianten des erfindungsgemäßen Rotors. Für den Aufbau des erfindungsgemäßen Rotors wird eine Vielzahl derartiger Bleche 1 in axialer Richtung, d.h. entlang der Rotationsachse 6, aufeinander gestapelt. Alternativ kann der Rotor auch als ein Block ausgeführt sein, dessen Querschnitt mit der gezeigten Darstellung der Figuren 1 bis 3 übereinstimmt.

Zur Vereinfachung der Darstellung ist der Stator nicht abgebildet. Das Rotorblech 1 verfügt über mehrere Aussparungen 2, 3, 4, 5, die die Funktion von Flusssperren übernehmen und durch deren Anordnung ein vierpoliger Rotor gebildet wird, dessen magnetischer Fluss in den Bereichen mit den Flusssperren 2, 3, 4, 5 gehemmt ist. Allgemein wird der Bereich mit hoher magnetischer Leitfähigkeit als d-Achse und der Bereich geringerer magnetischer Leitfähigkeit als q-Achse gekennzeichnet. Das zusammengesetzte Blechpaket wird auf einer nicht dargestellten Rotorwelle montiert. Die Anordnung der einzelnen Flusssperren 2, 3, 4, 5 basiert auf der technischen Lehre der US Patentschrift US 5,818,140.

Das Rotorblech zeigt also vier Flusssperrenabschnitte, wobei die Flusssperren in diesen Bereichen identisch zueinander aufgebaut sind. Die Flusssperren lassen sich als bananenförmig beschreiben, deren Enden in Richtung des Rotorumfangs gekrümmt sind und an den Umfang heranreichen.

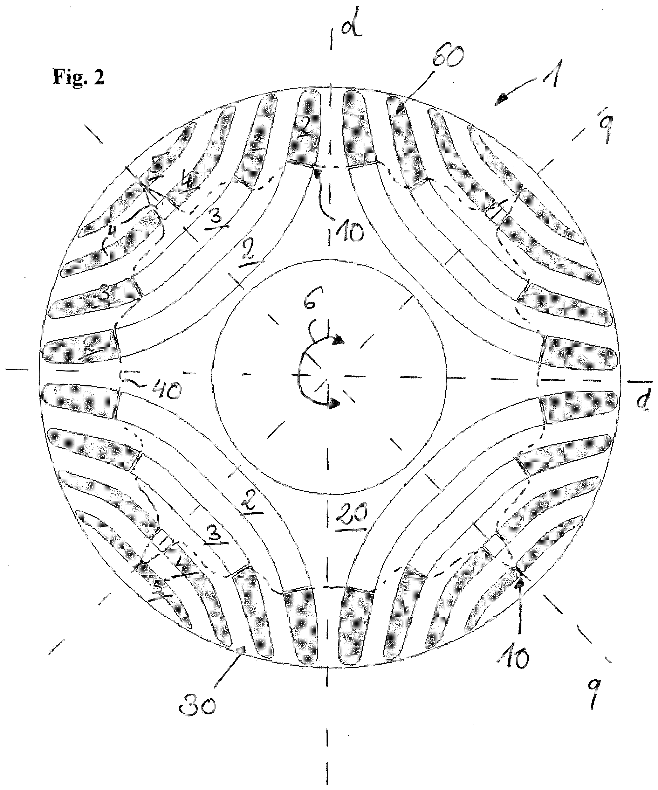

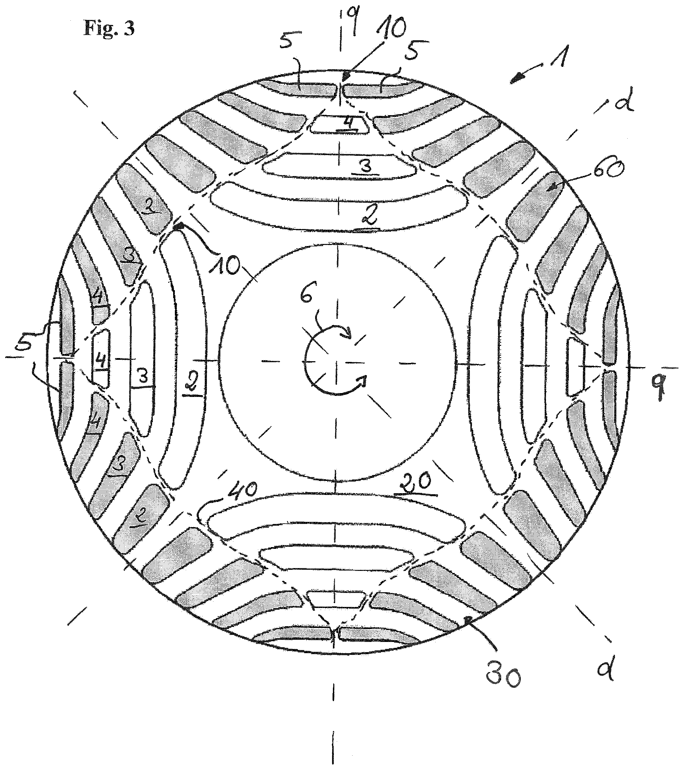

Die dargestellte Rotorkonstruktion unterscheidet sich von dem konventionellen Design nach "Vagati" allerdings in der Anordnung der einzelnen Stege 10, durch welche die einzelnen Flusssperren 2, 3, 4, 5 in unterschiedliche Abschnitte zwei- oder mehrgeteilt werden. Kennzeichnend für die Ausführungsvarianten der Figuren 2 und 3 ist, dass die radial innen liegenden Flusssperren 2, 3, 4 jedes Kreissektors durch zwei Stege 10 dreigeteilt werden, während die in Radialrichtung äußerste Flusssperre 5 nur durch einen Steg 10 zweigeteilt wird. Im Gegensatz dazu werden im Ausführungsbeispiel der Figur 1 die beiden äußeren Flusssperren 2, 3 durch einen Steg 10 zweigeteilt und die inneren Flusssperren 4, 5 durch zwei Stege 10 dreigeteilt.

Die Anordnung der einzelnen Stege 10 sorgt nicht nur für eine verbesserte Blechstabilität während des Rotorbetriebs, sondern unterteilt zudem das Rotorblech 1 in einen inneren Teilbereich 20 sowie einen äußeren Teilbereich 30. Zur Verdeutlichung der Bereichsteilung ist die kreisförmige gestrichelte Linie 40 eingezeichnet, die den Grenzverlauf zwischen dem inneren und dem äußeren Rotorbereich 20, 30 andeutet.

Die außen liegenden Magnetflusssperren 5 und die im Bereich 30 liegenden Teilbereiche der Flusssperren 2, 3, 4 dienen erfindungsgemäß zur Ausbildung eines Anlaufkäfigs. Zu diesem Zweck werden beim Rotoraufbau stirnseitig nicht dargestellte Kurzschlussringe befestigt oder mitausgegossen, deren Form beispielsweise unverändert vom Anlaufkäfig einer Asynchronmaschine übernommen werden kann. Zusätzliche Vorkehrungen für einen Anlaufkäfig, wie die oftmals eingelassenen Metallstäbe, können dadurch entfallen.

Die Bereiche der Flusssperren des äußeren Rotorbereiches 30 sind mit einem elektrischen-leitenden und magnetischen-nichtleitenden Material gefüllt, insbesondere mit einem Füllstoff aus Aluminium bzw. einer Aluminiumlegierung. In der Darstellung der Figuren 1 bis 3 ist dies durch die graue Füllfarbe 60 verdeutlicht. Die im Bereich 20 liegenden Flusssperrenbereiche der Flusssperren 2, 3, 4 können entweder mit einem magnetisch-nichtleitenden Material gefüllt sein oder lediglich Luft beinhalten. Der verwendete Füllstoff sollte vorzugsweise nicht oder schlecht elektrisch-leitend sein.

Für das Anlaufverhalten des Rotors, d.h. das Synchronisieren der Drehzahl des Rotors mit der Netzfrequenz, in einem Synchron-Reluktanzmotor ist nun das Verhältnis der Fläche des ausgefüllten Bereichs der Flusssperren 2, 3, 4, 5 zu der Fläche des nicht ausgefüllten Bereichs der Flusssperren 2, 3, 4 von Bedeutung. Bei zu geringer Füllfläche ist der gebildete Anlaufkäfig zu klein, ein belasteter Rotor kann nicht ohne mechanische Unterstützung anlaufen. Ist die Füllmenge zu groß gewählt, nimmt die Schwungmasse nachteilig zu und das Betriebsverhalten des Motors verschlechtert sich ebenfalls. Es gilt daher ein optimales Verhältnis zu suchen, insbesondere für die Anwendung des Rotors zum Einsatz in einem Antriebsmotor einer Pumpen.

Für die Definition wird die im Blechquerschnitt gezeigte Fläche des für alle Flusssperren 2, 3, 4, 5 verwendeten Füllmaterials summiert und ins Verhältnis zur Fläche der entsprechend nicht ausgefüllten Bereiche der Flusssperre 2, 3, 4 gesetzt. In den Darstellungen der Figuren 1 bis 3 entspricht dies dem Verhältnis aller grau gezeichneten Flächen 60 innerhalb der Flusssperren 2, 3, 4, 5 zum Verhältnis der nicht grau hinterlegten Flächen innerhalb der Flusssperren 2, 3, 4.

Als geeignetes Verhältnis der Fläche des ausgefüllten Bereichs der Flusssperren 2, 3, 4, 5 zu der Fläche des Bereichs der nicht ausgefüllten Flusssperren 2, 3, 4 hat sich ein Wert von mindestens 0,2 gezeigt. Bevorzugt liegt das Verhältnis im Bereich zwischen 0,2 und 3, besonders bevorzugt im Bereich zwischen 0,3 und 3, idealerweise im Bereich von 0,75 bis 1,5.

Weiterhin sind die Flächen der ausgefüllten Bereiche der Flusssperren 2, 3, 4 untereinander angepasst, d.h. identisch gewählt. Für die äußerste Flusssperre 5 kann dieses Kriterium unter Umständen nicht eingehalten werden, da diese einen flächenmäßig zu kleinen Füllraum bietet.

Als weiteres Kriterium gilt, dass das Verhältnis zwischen ausgefüllten und nicht ausgefüllten Bereich der in Radialrichtung des Rotors innenliegenden Flusssperre 2 mindestens 0,2 beträgt, bevorzugt im Bereich zwischen 0,2 und 2, besonders bevorzugt im Bereich zwischen 0,35 und 0,8 und idealerweise zwischen 0,35 und 0,6 liegt. Im Ausführungsbeispiel der Figur 1 beträgt dieses Verhältnis 0,5, während für das Ausführungsbeispiel der Figur 3 ein kleineres Verhältnis für die innerste Flusssperre 2 angenommen wurde, beispielsweise von etwa 0,35. Für das Ausführungsbeispiel der Figur 2 wurde ein Verhältnis von 0,5 angesetzt.

Die Fläche der ausgefüllten Bereiche der in Radialrichtung weiter außen liegenden teilgefüllten Flusssperren 3, 4 ist an die Fläche des ausgefüllten Bereichs der innenliegenden Flusssperre 2 größenmäßig angepasst bzw. nahezu identisch zu dieser. Im Ausführungsbeispiel der Figur 2 ist die ausgefüllte Fläche der Flusssperre 4 nicht identisch mit der ausgefüllten Fläche der innersten Flusssperre 2.

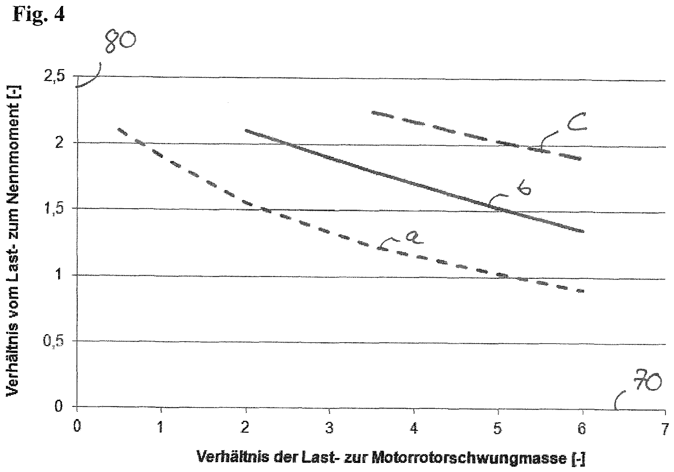

In Figur 4 sind die Intrittfall-Grenzkennlinien für unterschiedliche Flächenverhältnisse bei Synchronreluktanzrotoren dargestellt. Im dargestellten Diagramm entspricht die Achse 70 dem Verhältnis der Last- zur Motorschwungmasse und die Achse 80 dem Verhältnis Last- zu Nennmoment. Die Flächen unter den jeweiligen Linien a, b, c definieren die Bereiche, in denen der Line-Start-Synchronreluktanzmotor sicher anläuft bzw. synchronisiert werden kann. Die Linie a kennzeichnet dabei das Betriebsverhalten eines nicht unter die Erfindung fallenden Rotors, dessen Flusssperren alle vollständig mit einem Aluminium bzw. einer Aluminiumlegierung gefüllt sind.

Die Linie b zeigt das Betriebsverhalten eines erfindungsgemäßen Rotors mit einem Flächenverhältnis der innersten Flusssperre von etwa 0,3. Die oberste Kennlinie c ist dem Rotor aus dem Ausführungsbeispiel der Figur 1 zuzuordnen mit einem Flächenverhältnis der innersten Flusssperre von 0,5.

Aus der Figur 4 ist zu sehen, dass durch die gezielte Optimierung des Flächenverhältnisses eine deutliche Verbesserung der Anlauffähigkeit des Line-Start-Reluktanzmotors durch die Vergrößerung des Bereiches, in dem der Motor sicher synchronisiert, bzw. der Fläche unter den Linien b, c erreicht werden kann.

Nachfolgend werden weitere Optimierungen des Rotors diskutiert, die nur optionale Ausgestaltungen betreffen. Die Flusssperrenbereiche des äußeren Rotorabschnittes 30 können optional in radialer Richtung unmittelbar an den Außenumfang des Rotors heranreichen, sodass der Rotorumfang teilweise von dem das Aluminium bzw. die Aluminiumlegierung umfassenden Füllmaterial gebildet wird. Die bisher vorgesehenen Stege am Rotorumfang sind nicht mehr vorhanden, wodurch sich der magnetische Widerstand des Flusssperrabschnittes erhöht und das Verhältnis zwischen q- und d-Achse optimiert wird. Durch die Füllung der an den Rotorumfang angrenzenden Flusssperren bzw. Flusssperrenbereiche lassen sich die bisher vorgesehenen Stege erst entfernen, ohne nennenswerte Stabilitätseinbußen des Rotorpaketes in Kauf nehmen zu müssen. Grundsätzlich müssen nicht alle außenliegenden und an den Rotorumfang angrenzenden Flusssperren bzw. Flusssperrenbereiche gefüllt sein. Prinzipiell ist es ausreichend, die ein oder mehreren Flusssperren in Nähe des Umfangsbereichs auszufüllen, um auf die nachteiligen Stege in diesem Bereich verzichten zu können. Bereits dadurch ergibt sich ein verbessertes Verhältnis der magnetischen Widerstände in d- und q-Achse, was zu einer Erhöhung des resultierenden Reluktanzmomentes des den Rotor verwendenden Synchronreluktanzmotors führt. Die Verwendung eines geeigneten Füllstoffes zur Ausbildung eines Anlaufkäfigs und die vorbeschriebene Steganordnung der Stege 10 ist lediglich optional.

Die Einbringung des Füllmaterials in die Flusssperren 5 sowie die außen liegenden Bereiche der Flusssperren 2, 3, 4 ist auf unterschiedliche Art und Weise möglich. Es bietet sich die Einbringung per Guss an. Selbstverständlich können die Füllmaterialen auch als Feststoff in die Aussparungen 2, 3, 4, 5 eingesetzt werden.

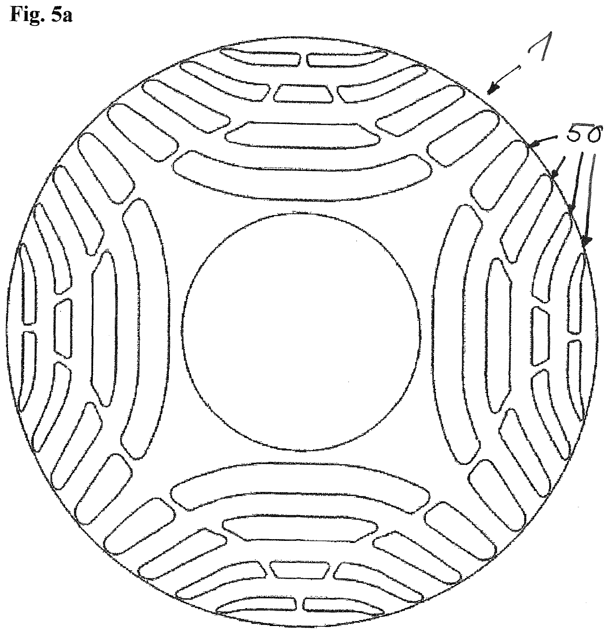

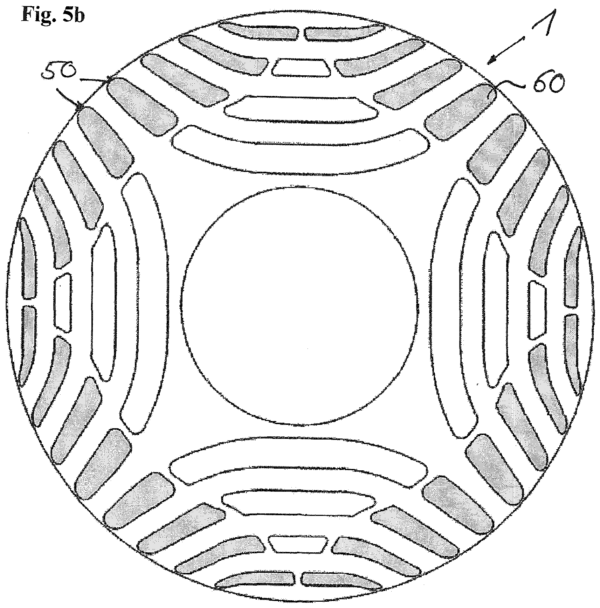

Die Figuren 5a, 5b dienen zur Erläuterung eines optionalen Herstellungsverfahrens eines Rotors, vorzugsweise eines Rotors gemäß einer der Ausführungsvarianten der Figuren 1 bis 3. Die Rotorbleche 1 des aus einzelnen Blechen gestapelten Blechpaketes des Rotors werden mit der vorbeschriebenen Flusssperrenanordnung gefertigt. Die inneren Stege 10, d. h. die Stege, die die einzelnen Flusssperren unterteilen, und nicht im Bereich des Rotorumfangs liegen, bilden die bereits beschriebene Linie 40, die den Rotor in einen inneren und äußeren Rotorbereich 20, 30 unterteilt. Das Rotorblech 1 wird jedoch zunächst mit äußeren Stegen 50 gefertigt, die in der Darstellung gemäß Figur 5a ersichtlich sind.

Im Anschluss werden die Flusssperrenabschnitte, die im äußeren Rotorbereich 30 liegen, mit Aluminium bzw. einer Aluminiumlegierung ausgegossen, wobei hier im Wesentlichen ein Aludruckgussverfahren eingesetzt wird. Hierbei wird das Aluminium bzw. die Aluminiumlegierung in die Flusssperrenabschnitte des äußeren Rotorbereichs 30 eingepresst. Es entsteht ein Rotorblech gemäß der Darstellung der Figur 5b.

In einem nachfolgenden Verfahrensschritt wird der Rotor überdreht, so dass das Blech an Durchmesser verliert und der Umfang schrumpft. Die die äußeren Stege 50 bildende Materialschicht verschwindet und beide Enden der bananenförmigen Flusssperren 2, 3, 4, 5 grenzen unmittelbar an den Rotorumfang an, d.h. das Aluminium bzw. die Aluminiumlegierung liegt offen zum Umfang und bildet einen Teil des Rotorumfangs. Das Ergebnis entspricht der Darstellung gemäß Figur 3. Durch das Verschwinden der jeweiligen Stege 50 in diesem Bereich wird die magnetische Leitfähigkeit entlang der q-Achse reduziert und damit das Verhältnis zwischen den magnetischen Widerständen in der q- und d-Achse optimiert. Weiterhin wird durch das Vorhandensein des Aluminiumkäfigs im Bereich des äußeren Rotorabschnittes 30 die mechanische Festigkeit auch ohne diese äußeren Stege 50 des Rotorblechpaketes erreicht. Das Herstellungsverfahren lässt sich ohne Einschränkung für die Herstellung jedes Rotors der Ausführungsbeispiele gemäß den Figuren 1 bis 3 verwenden.

Auch die inneren Stege 10 wirken sich negativ auf das Verhältnis zwischen den magnetischen Widerständen in der d- und q-Achse aus, weshalb die Anzahl und deren Materialstärke gerne so klein wie möglich gehalten werden sollte. Die inneren Stege 10 sind jedoch zur Gewährleistung der Rotorstabilität notwendig. Während des Einbringens bzw. Einpressens des Füllmaterials, d.h. des Aluminiums bzw. der Aluminiumlegierung, in den Flusssperren 5 bzw. den Flusssperrenbereichen 2, 3, 4 im äußeren Rotorsegment 30 wirken hohe Kräfte auf die Stege 10 der zu füllenden Flusssperren, wodurch Beschädigungen der inneren Stege 10 auftreten können.

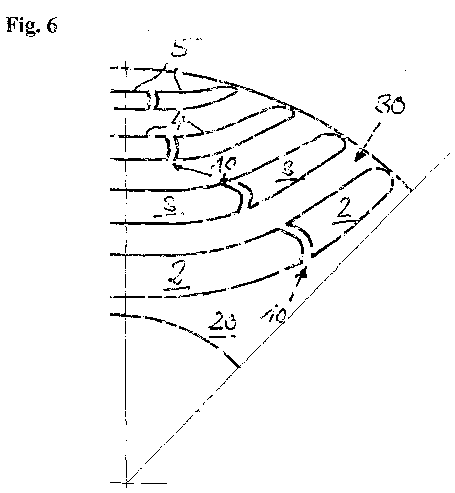

Anstatt die Stege 10 stärker zu dimensionieren werden diese nun bogenförmig ausgeführt, was deutlich der Detailaufnahme der Figur 6 zu entnehmen ist. Diese Aufnahme zeigt ein Achtel eines Rotorbleches gemäß einer der Figuren 1 bis 3. Der übrige Rotorbereich ist symmetrisch zur Darstellung der Figur 6 ausgeführt.

Die bogenförmigen Rippen 10 stabilisieren den Rotor während des Aludruckgusses. In die im äußeren Bereich 30 liegenden Flusssperren 5 sowie Flusssperrenbereiche der Flusssperren 2, 3, 4 wird mit hohem Druck Aluminium eingepresst, während innen normaler Umgebungsdruck herrscht. Dadurch wird in den bogenförmigen Rippen eine Druckspannung aufgebaut, welche den Rotor stabilisiert. Einem Einfallen der Rotorstruktur kann damit effektiv entgegen gewirkt werden.

Insbesondere zeigt die bogenförmige Rippenstruktur eine Wölbung in den gefüllten Flusssperrenbereich hinein, sodass der Druck des Aludruckgusses dem Bogen entgegenwirkt. Damit kann die Stärke der inneren Rippen 10 weiter reduziert werden, wodurch diese dennoch dem hohen Druck des Aluminiums beim Gießen standhalten können. Die beschriebene bogenförmige Rippenstruktur kann ohne Einschränkung für jedes der Ausführungsbeispiele gemäß den Figuren 1 bis 3 unabhängig vom Herstellungsverfahren der Figuren 5a, 5b verwendet werden.

## Patentansprüche

1. Rotor für eine Reluktanzmaschine umfassend ein zylinderförmig aufgebautes weichmagnetisches Element, wobei das weichmagnetische Element Aussparungen zur Ausbildung von magnetischen Flusssperren (2, 3, 4, 5) aufweist und zumindest ein Teil der Aussparungen mit einem elektrisch-leitenden und magnetisch-nichtleitenden Füllmaterial gefüllt ist, um einen Anlaufkäfig auszubilden, wobei das Verhältnis der gesamten Querschnittsfläche der ausgefüllten Bereiche der Flusssperren (2, 3, 4, 5) zu der gesamten Querschnittsfläche der entsprechenden Bereiche der nicht ausgefüllten Flusssperren (2, 3, 4) für wenigstens einen Rotorpol mindestens 0,2 beträgt,
**dadurch gekennzeichnet,**
**dass** das Verhältnis zwischen den Querschnittsflächen des ausgefüllten und des nicht ausgefüllten Bereichs der in Radialrichtung des Rotors innenliegenden Flusssperre (2) im Bereich zwischen 0,35 und 0,6 liegt.

2. Rotor nach Anspruch 1, **dadurch gekennzeichnet, dass** das genannte Verhältnis der gesamten Querschnittsfläche der ausgefüllten Bereiche der Flusssperren (2, 3, 4, 5) zu der gesamten Querschnittsfläche der Bereiche der nicht ausgefüllten Flusssperren (2, 3, 4) im Bereich zwischen 0,2 und 3 liegt, bevorzugt im Bereich zwischen 0,3 und 3, bevorzugter im Bereich von 0,75 bis 1,5 liegt.

3. Rotor nach einem der vorhergehenden Ansprüche, **dadurch gekennzeichnet, dass** für die Bestimmung des Verhältnisses nur Flusssperren (2, 3, 4, 5) mit Füllmaterial und/oder Flusssperren (2, 3, 4, 5), deren Enden an den Rotorumfang heranreichen und/oder eine bananenartige Formgebung aufweisen, berücksichtigt werden.

4. Rotor nach einem der vorhergehenden Ansprüche, **dadurch gekennzeichnet, dass** die Flächen der ausgefüllten Bereiche aller teilgefüllten Flusssperren (2, 3, 4), vorzugsweise aller gefüllten Flusssperren (2, 3, 4, 5), untereinander größenmäßig angepasst, vorzugsweise nahezu identisch sind.

5. Rotor nach einem der vorhergehenden Ansprüche, **dadurch gekennzeichnet, dass** die Flächen der ausgefüllten Bereiche der in Radialrichtung weiter außen liegenden teilgefüllten Flusssperren (3, 4), vorzugsweise aller außen liegenden gefüllten Flusssperren (3, 4, 5), an die Fläche des ausgefüllten Bereichs der innenliegenden Flusssperre (2) größenmäßig angepasst bzw. nahezu identisch ist.

6. Rotor nach einem der vorhergehenden Ansprüche, **dadurch gekennzeichnet, dass** ein oder mehrere Flusssperren (2, 3, 4, 5) durch ein oder mehrere Stege (10) zwei- oder mehrgeteilt sind, wobei zumindest ein Teil dieser Stege (10) eine an die Flusssperre (2, 3, 4, 5) angrenzende gekrümmte Kante aufweist, insbesondere eine bogenförmige Kante aufweist.

7. Rotor nach Anspruch 6, **dadurch gekennzeichnet, dass** sich wenigstens eine, an einen gefüllten Bereich der Flusssperre (2, 3, 4, 5) angrenzende gekrümmte Kante in den gefüllten Bereich der Flusssperre (2, 3, 4, 5) hinein wölbt.

8. Rotor nach Anspruch 6 oder 7, **dadurch gekennzeichnet, dass** sich wenigstens eine, an einen nicht gefüllten Bereich der Flusssperre (2, 3, 4, 5) angrenzende gekrümmte Kante aus dem nicht gefüllten Bereich der Flusssperre (2, 3, 4, 5) heraus wölbt.

9. Rotor nach einem der vorhergehenden Ansprüche, **dadurch gekennzeichnet, dass** das Füllmaterial Aluminium oder eine Aluminiumlegierung umfasst.

10. Reluktanzmaschine, insbesondere Synchron-Reluktanzmaschine, mit wenigstens einem Rotor nach einem der vorhergehenden Ansprüche, wobei die Maschine vorzugsweise keinen Frequenzumrichter zur Ansteuerung umfasst.

## Claims

1. Rotor for a reluctance machine comprising a cylindrical soft-magnetic element, wherein the soft-magnetic element has cutouts for forming magnetic flux barriers (2, 3, 4, 5) and at least some of the cutouts are filled with an electrically conductive and magnetically non-conductive filler material, in order to form a starting cage, wherein the ratio of the entire cross-sectional area of the filled regions of the flux barriers (2, 3, 4, 5) to the entire cross-sectional area of the corresponding regions of the non-filled flux barriers (2, 3, 4) for at least one rotor pole is at least 0.2, **characterized in that** the ratio between the cross-sectional areas of the filled region and the non-filled region of the flux barrier (2) which is situated on the inside in the radial direction of the rotor is in the range of between 0.35 and 0.6.

2. Rotor according to Claim 1, **characterized in that** the said ratio of the entire cross-sectional area of the filled regions of the flux barriers (2, 3, 4, 5) to the entire cross-sectional area of the regions of the non-filled flux barriers (2, 3, 4) is in the range of between 0.2 and 3, preferably in the range of between 0.3 and 3, more preferably in the range of from 0.75 to 1.5.

3. Rotor according to either of the preceding claims, **characterized in that** only flux barriers (2, 3, 4, 5) containing filler material and/or flux barriers (2, 3, 4, 5) of which the ends reach the rotor periphery and/or have a banana-shaped design are taken into account for determining the ratio.

4. Rotor according to one of the preceding claims, **characterized in that** the areas of the filled regions of all of the partially filled flux barriers (2, 3, 4), preferably all of the filled flux barriers (2, 3, 4, 5), are matched in terms of size, preferably are virtually identical.

5. Rotor according to one of the preceding claims, **characterized in that** the areas of the filled regions of the partially filled flux barriers (3, 4) which are situated further on the outside in the radial direction, preferably all of the filled flux barriers (3, 4, 5) which are situated on the outside, are matched in terms of size or is virtually identical to the area of the filled region of the inner flux barrier (2).

6. Rotor according to one of the preceding claims, **characterized in that** one or more flux barriers (2, 3, 4, 5) are divided into two or more by one or more webs (10), wherein at least some of these webs (10) have a curved edge which adjoins the flux barrier (2, 3, 4, 5), in particular an arcuate edge.

7. Rotor according to Claim 6, **characterized in that** at least one curved edge which adjoins a filled region of the flux barrier (2, 3, 4, 5) bends into the filled region of the flux barrier (2, 3, 4, 5).

8. Rotor according to Claim 6 or 7, **characterized in that** at least one curved edge which adjoins a non-filled region of the flux barrier (2, 3, 4, 5) bends out of the non-filled region of the flux barrier (2, 3, 4, 5).

9. Rotor according to one of the preceding claims, **characterized in that** the filler material comprises aluminium or an aluminium alloy.

10. Reluctance machine, in particular synchronous reluctance machine, comprising at least one rotor according to one of the preceding claims, wherein the machine preferably comprises no frequency converter for driving purposes.

## Revendications

1. Rotor destiné à une machine à réluctance et comprenant un élément magnétique doux en forme de cylindre, l'élément magnétique doux comportant des évidements destinés à former des barrières anti-flux magnétique (2, 3, 4, 5) et au moins une partie des évidements sont remplis d'un matériau de remplissage, électriquement conducteur et magnétiquement non-conducteur, pour former une cage de démarrage, le rapport de la surface totale en coupe transversale des zones remplies des barrières anti-flux (2, 3, 4, 5) à la surface totale en coupe transversale des zones correspondantes des barrières anti-flux non remplies (2, 3, 4) pour au moins un pôle de rotor étant d'au moins 0,2,
**caractérisé en ce que** le rapport entre la surface en coupe transversale de la zone remplie et la surface en coupe transversale de la zone non remplie de la barrière anti-flux (2), située à l'intérieur dans la direction radiale du rotor, est dans la gamme comprise entre 0,35 et 0,6.

2. Rotor selon la revendication 1, **caractérisé en ce que** ledit rapport de la surface totale en coupe transversale des zones remplies des barrières anti-flux (2, 3, 4, 5) à la surface totale en coupe transversale des zones des barrières anti-flux non remplies (2, 3, 4) est dans la gamme comprises entre 0,2 et 3, de préférence dans la gamme comprise entre 0,3 et 3, plus préférablement dans la gamme allant de 0,75 à 1,5.

3. Rotor selon l'une des revendications précédentes, **caractérisé en ce que**, pour déterminer le rapport, seules sont prises en compte des barrières anti-flux (2, 3, 4, 5) comprenant du matériau de remplissage et/ou des barrières anti-flux (2, 3, 4, 5), dont les extrémités atteignent la circonférence du rotor et/ou présentent une forme de banane.

4. Rotor selon l'une des revendications précédentes, **caractérisé en ce que** les surfaces des zones remplies de toutes les barrières anti-flux partiellement remplies (2, 3, 4), de préférence de toutes les barrières anti-flux remplies (2, 3, 4, 5), sont adaptées les uns aux autres en termes de taille, de préférence sont presque identiques.

5. Rotor selon l'une des revendications précédentes, **caractérisé en ce que** les surfaces des zones remplies des barrières anti-flux partiellement remplies (3, 4), situées plus à l'extérieur dans la direction radiale, de préférence de toutes les barrières anti-flux remplies (3, 4, 5), situées à l'extérieur, sont adaptées en termes de taille à la surface de la zone remplie de la barrière anti-flux (2) située à l'intérieur ou sont presque identiques.

6. Rotor selon l'une des revendications précédentes, **caractérisé en ce qu'**une ou plusieurs barrières anti-flux (2, 3, 4, 5) sont divisées en deux parties ou plus par une ou plusieurs nervures (10), au moins une partie de ces nervures (10) comportent un bord incurvé, en particulier un bord arqué, adjacent à la barrière anti-flux (2, 3, 4, 5) .

7. Rotor selon la revendication 6, **caractérisé en ce qu'**au moins un bord incurvé, adjacent à une zone remplie de la barrière anti-flux (2, 3, 4, 5), se cintre vers l'intérieur de la zone remplie de la barrière anti-flux (2, 3, 4, 5).

8. Rotor selon la revendication 6 ou 7, **caractérisé en ce qu'**au moins un bord incurvé, adjacent à une zone non remplie de la barrière anti-flux (2, 3, 4, 5), se cintre vers l'extérieur de la zone non remplie de la barrière anti-flux (2, 3, 4, 5).

9. Rotor selon l'une des revendications précédentes, **caractérisé en ce que** le matériau de remplissage comprend de l'aluminium ou un alliage d'aluminium.

10. Machine à réluctance, en particulier machine à réluctance synchrone, comprenant au moins un rotor selon l'une des revendications précédentes, la machine ne comporte de préférence pas de convertisseur de fréquence pour la commande.
